# EUROPÄISCHE PATENTSCHRIFT

(11) **EP 3 300 486 B1**
(45) Veröffentlichungstag und Bekanntmachung des Hinweises auf die Patenterteilung: **25.03.2020**
(21) Anmeldenummer: 16717948.0
(22) Anmeldetag: 22.04.2016
(51) Int. Cl.: B29C 48/90, B29C 48/88, B29C 48/09, B29L 31/06, B29L 23/00, B29C 48/12

(54) **VERFAHREN UND VORRICHTUNG ZUM KÜHLEN VON EXTRUDIERTEN PROFILEN**
METHOD AND DEVICE FOR COOLING EXTRUDED PROFILES
PROCÉDÉ ET DISPOSITIF POUR LE REFROIDISSEMENT DE PROFILÉS EXTRUDÉS

(30) Priorität: 26.04.2015 DE 102015106398
(43) Veröffentlichungstag der Anmeldung: 04.04.2018
(73) Patentinhaber: battenfeld-cincinnati Germany GmbH, 32547 Bad Oeynhausen (DE)
(72) Erfinder: DOHMANN, Heinrich, 37671 Höxter (DE); STIEGLITZ, Henning, 32425 Minden (DE)
(86) Internationale Anmeldenummer: PCT/EP2016/059025
(87) Internationale Veröffentlichungsnummer: WO 2016/173944

(56) Entgegenhaltungen:
- EP-A1- 0 925 905
- EP-A1- 2 407 297
- EP-A2- 0 425 944
- WO-A2-2010/029141
- DE-A1- 2 455 779
- DE-B3-102007 026 309
- DE-T2- 69 403 693
- DE-T2- 69 403 693
- JP-A- 2002 144 408
- N.N.: "ECB Cooling Tank ECB Series Models", User guide UGE075-0913, 1. Januar 2013 (2013-01-01), Seite 6861, XP055276803, Franklin PA, USA Gefunden im Internet: URL:http://www.conairgroup.com/assets/Extr usion/Downloads/2013-Downstream-downloads/ UGE075-0813-ECB-Tank.pdf [gefunden am 2016-05-31]

## Beschreibung

Die Erfindung betrifft ein Verfahren zum Erhöhen der Kühlleistung einer Extrusionslinie und zum energieeffizienten Extrudieren eines Kunststoffprofils, insbesondere eines Kunststoffrohres, das die Schritte umfasst, a) Aufschmelzen von Kunststoff in einem Extruder, b) Formen eines Kunststoffstranges und Zuführen des Kunststoffstranges zu einem Werkzeug, c) Formen eines Kunststoffprofiles mittels des Werkzeuges und d) Kalibrieren und Aushärten mittels Kühlung des Profils in einer Kühl und/oder Kalibrierung, wobei zur äußeren Kühlung des Profils ein gasförmiges Medium durch einen oder mehrere Kühltanks gesaugt wird. Sowie eine entsprechende Vorrichtung.

Gattungsgemäße Verfahren sind bereits aus dem Stand der Technik bekannt, so beschreibt zum Beispiel die DE 24 55 779 A1 ein Verfahren zur Erhöhung der Ausstoßleistung bei der Extrusion und schlägt dafür das gasförmigen Verdampfen eines flüssigen Mediums an der inneren Oberfläche des Profils vor. Es wird weiterhin offenbart, dass die Luftströmung entgegen der Extrusionsrichtung geführt werden soll.

Die DE 10 2013 107 809 A1 schlägt ebenfalls zur Verbesserung der Wärmeabfuhr vor das Kühlmedium mit so hoher Relativgeschwindigkeit an der Grenzschicht zum Kunststoffprofil vorbeizuführen, dass dort eine turbulente Strömung einstellt.

Auch die WO 2010/029141 A2 offenbart eine Verfahren zum Erhöhen der Kühlleistung einer Extrusionslinie zum Extrudieren eines Kunststoffprofils, insbesondere eines Kunststoffrohres, das die Schritte umfasst, a) Aufschmelzen von Kunststoff in einem Extruder, b) Formen eines Kunststoffstranges und Zuführen des Kunststoffstranges zu einem Werkzeug, c) Formen eines Kunststoffprofiles mittels des Werkzeuges und d) Kalibrieren und Aushärten mittels Kühlung des Profils in einer Kalibrierung, wobei zusätzlich zur Außenkühlung in der Kalibrierung das Profil im Inneren gekühlt wird, wobei vorgesehen, dass zur inneren Kühlung des Profils die Luft entgegen der Extrusionsrichtung mittels einer Absaugung durchgesaugt wird.

**Aufgabe** der Erfindung ist es, die bekannten Verfahren und Vorrichtungen derart zu verbessern, dass die Kühlleistung erhöht wird und dafür aber der Aufwand an Anschaffungskosten sowie die Betriebskosten möglichst gering gehalten werden. Weiterhin soll erreicht werden, dass weitegehend keine Flüssigkeit am Umfang des Kunststoffprofils entlang nach unten laufen kann und die Kühlung gleichmäßiger bezogen auf den Profilquerschnitt wird.

Die **Lösung** der Aufgabe bezüglich des Verfahrens ist in Verbindung mit dem Oberbegriff des Anspruches 1 dadurch gekennzeichnet, dass das sich die Temperatur und die Sättigung des gasförmigen Mediums, zwischen einem Eintrittsbereich und einem Austrittsbereich für das gasförmige Medium, erhöht, zwischen dem Eintrittsbereich und dem Austrittsbereich über Sprühdösen ein flüssiges Medium zugegeben wird, wobei das flüssige Medium durch Erwärmung verdunstet und die Sättigung des gasförmigen Mediums erhöht wird, wobei sowohl die Temperatur als auch die Sättigung des gasförmigen Mediums beeinflusst werden können, wobei bei der Erhöhung der Sättigung des gasförmigen Mediums dessen Taupunkt nicht überschritten wird.

Durch dieses erfindungsgemäße Verfahren wird eine effiziente Kühlung des Profils erreicht. Ein gasförmiges Medium, in der Regel Luft (es kann aber auch jedes andere Gas eingesetzt werden, das gut geeignet ist Flüssigkeit zu binden, beispielhaft wird aber hier von Luft gesprochen), wird außen an der Profiloberfläche vorbeigeführt. Wärme wird dabei vom Profil über die Profiloberfläche an die Luft abgegeben. Über eine definierte Strecke in der Kühlstrecke wird ein Flüssigkeit, in der Regel Wasser (auch hier ist jedes geeignete flüssige Medium denkbar, das bei den bekannten Prozeßtemperaturen verdampft, erläutert wir es jedoch hier am Beispiel Wasser), eingesprüht. Durch das Einsprühen wird das Wasser vernebelt, bereits in der erwärmten Luft, aber auch beim Auftreffen auf die Oberfläche des Profils verdunstet das eingesprühte Wasser. Die durchströmende Luft wird erwärmt, kann damit auch mehr Wassermoleküle aufnehmen, ihre Sättigung nimmt zu. Es ist auch die Beeinflussung des Druckes denkbar, denn komprimierte Luft hat einen niedrigeren Taupunkt (Wasser kondensiert aus, Luft wird trockener) als Umgebungsluft bei Normaldruck. Weiterhin wird sichergestellt, dass bei der Erhöhung der Sättigung der Taupunkt nicht überschritten wird und somit das Wasser nicht kondensiert. Es wird also nicht die maximale Sättigung erreicht, die relative Feuchte bleibt kleiner 100%.

Um den Sättigungsgrad der Luft wieder zu minimieren, ist in einer weiteren Fortbildung vorgesehen über Zusatzöffnungen zusätzliche Luft anzusaugen. Die weniger gesättigte Luft vermischt sich mit der mehr gesättigten Luft und das Gemisch ist dann wieder in der Lage weitere Wassermoleküle aufzunehmen.

Erfindungsgemäß werden die Mengen an Wasser und die Mengen an Luft über ein mathematisches Modell so abgestimmt, dass die optimale Wärmemenge dem Profil entzogen wird. Dies kann so gesteuert und/oder geregelt werden, dass auch eine Temperstrecke mit umfasst wird. Hier wird dem Profil in Extrusionsrichtung kaum Wärme entzogen, damit die aus dem inneren Bereich, z.B. bei dickwandigen Rohren, die Wäre in den äußeren Bereich gelangen kann. Auf diesem Wege werden Spannungen und später Qualitätsmängel vermieden.

In einer weiteren Fortbildung ist vorgesehen, dass die annähernd gesättigte Luft abgekühlt wird, hier genügt oft bereits der Kontakt zur Umgebung, es muss also keine zusätzliche Energie aufgebracht werden, wodurch eine Übersättigung entsteht und das Wasser kondensiert. Das kondensierte Wasser wird aufgefangen und zur erneuten Verwendung den Sprühdüsen zugeführt. Die abgekühlte Luft ist dann ja wieder trockener und kann ebenfalls erneut für einen weiteren Umlauf zum Eintrittsbereich geführt werden.

Weiterbildungsgemäß ist zusätzlich vorgesehen, die Luft mittels Leitbleche zu führen. Durch diese Leitbleche, die in Winkel und Verdrehung individuell veränderbar sein können, kann der Luftstrom gezielt beeinflusst werden. Die Luft kann so enger oder weiter weg an der Oberfläche des Profils vorbeigeführt werden oder sie kann so geleitet werden, dass sie schraubenartig um das Profil strömt. Es sind ist aber auch der Einbau Leitblechen in Form von Trichtern, wie sie in der DE 10 2007 026 309 A1 beschrieben sind, denkbar. Der Inhalt der DE '309 gehört somit zum Offenbarungsgehalt dieser Anmeldung.

Eine Erhöhung der Wärmeabgabe kann erreicht werden in dem die Luft entgegen der Extrusionsrichtung durch die Kühlstrecke gesaugt wird.

Die Lösung der Aufgabe zur Vorrichtung ist in den Ansprüchen 8 bis 10 wiedergegeben.

Die vorgeschlagenen Kammern können auch über einen Hohlkörper gebildet werden, wobei der Hohlkörper Kammern und Trennwände aufweist. Es ist aber auch denkbar, dass das eine Ende der Trennwände den Durchlassquerschnitt für das Profil abbildet und dass der Hohlkörper im Kühltank austauschbar ist.

Das erfindungsgemäße Verfahren und die Vorrichtung zeichnet sich dadurch aus, dass das physikalische Zusammenspiel von Gas und Flüssigkeit in Bezug auf Temperatur und Gesamtdruck in Verbindung mit dem Dampfdruck do abgestimmt wird, dass die Gleichgewichtsfeuchte, das Verhältnis von Mol Flüssigkeit zu Mol Gas, optimiert ist, wodurch die größtmögliche Wärmemenge abgeführt werden kann.

In den Zeichnungen wird schematisch eine erfindungsgemäße Vorrichtung gezeigt:
- Fig. 1: zeigt eine typische Extrusionslinie
- Fig. 2: den Teil einer Kühlstrecke
- Fig. 3: ein Querschnitt eines Kühltanks
- Fig. 4: eine Alternativ zu Figur 3

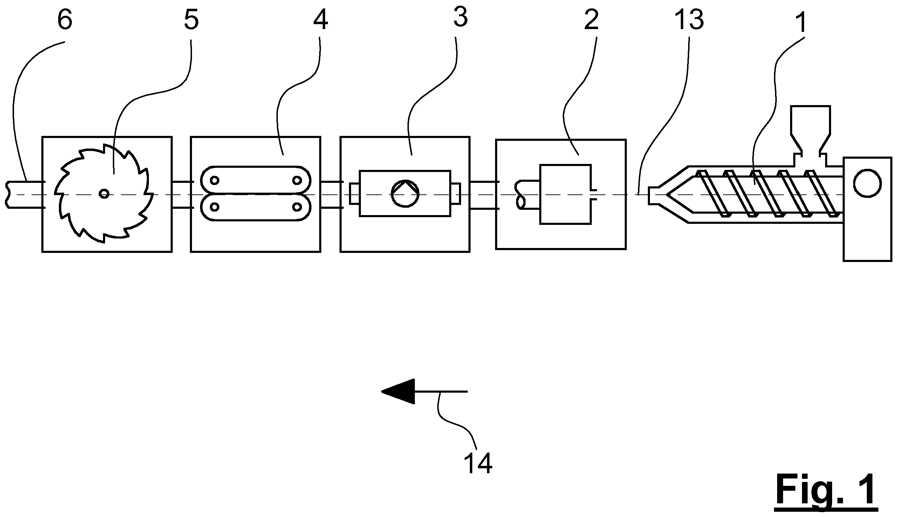

Figur 1 zeigt eine typische Extrusionslinie, wie sie heute für die Profilextrusion, egal, ob für die Produktion von Fensterprofilen oder Rohren, zum Einsatz kommt. Sie zeigt einen Extruder 1, in dem Kunststoff aufgeschmolzen wird, und kontinuierlich zur Formgebung ins Extrusionswerkzeug 2 gefördert wird. Daran schließt sich eine Kalibrierund/oder Kühleinrichtung 3 an, je nach Profil können weitere Kühlstationen eingesetzt werden. Nach den Kühlstationen schließt sich eine Abzugsvorrichtung 4 an. Um die Endlosprofile 6 auf die gewünschte Länge abzuschneiden ist anschließend eine Trennvorrichtung 5 angeordnet.

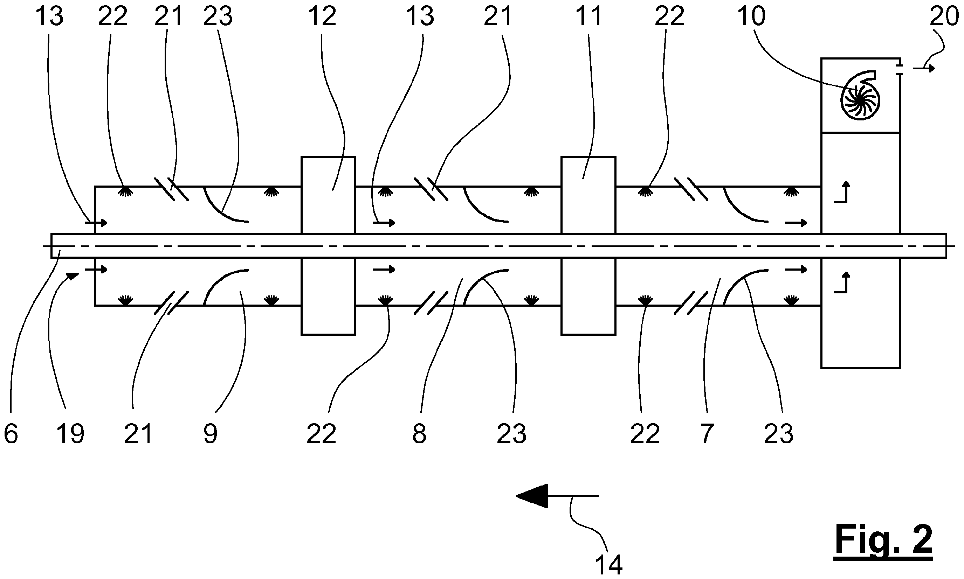

Figur 2 zeigt eine Kühlstrecke mit einem ersten, zweiten und dritten Kühltank (7, 8, 9). Die Kühltanks sind über je einem Verbindungstunnel 11 und 12 verbunden. Die Kühlstrecke weist einen Eintrittsbereich 19 und einen Austrittsbereich 20 auf, über die die Luft ein und austreten kann. In dieser Ausführung wird die Luft entgegen der Extrusionsrichtung 14 mittels der Absaugeinrichtung 10 gesaugt. Die Strömung 13 wird über die Pfeile symbolisiert. In den Kühltanks 7, 8 und 9 sind Sprühdüsen 22 angeordnet über die Wasser eingesprüht werden kann, entsprechende Zuleitungen sind nicht dargestellt. Weiterhin umfasst jeder Kühltank Zusatzöffnungen 21 über die weitere Luft angesaugt werden kann. Die Öffnungen können geöffnet und verschlossen werden, was auch über die Maschinensteuerung, z.B. im Rahmen des mathematischen Modells, realisierbar ist. Verstellbare Leitbleche 23 beeinflussen die Strömung 13 der Luft und damit Abstand und Art und Weise wie diese um das Profil 6 geführt wird.

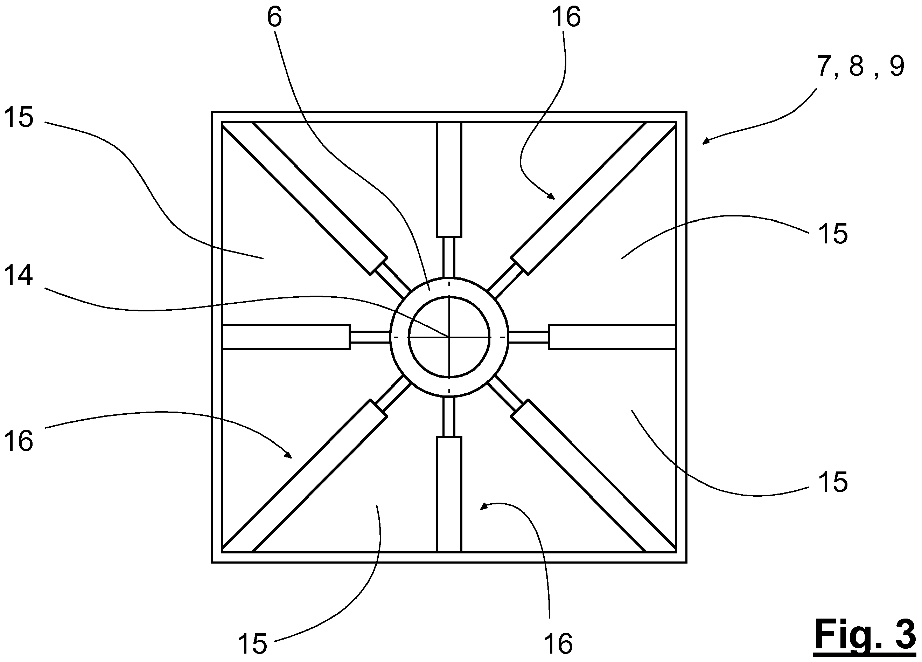

In Figur 3 wird eine andere Ausführung eines Kühltanks im Schnitt quer zur Extrusionsachse dargestellt. Der Kühltank ist in Kammern 15 aufgeteilt, die durch Trennwände 16 gebildet werden. Die Trennwände 16 sind an einem Ende an der Wandung des Kühltanks befestigt und am anderen Ende in der Länge veränderbar damit unterschiedliche Querschnitte des Profils 6 abgekühlt werden können. Die Luft zum Kühlen wird durch die Kammern 15 geführt, wobei jede Kammer 15 unterschiedlich stark durchströmt werden kann.

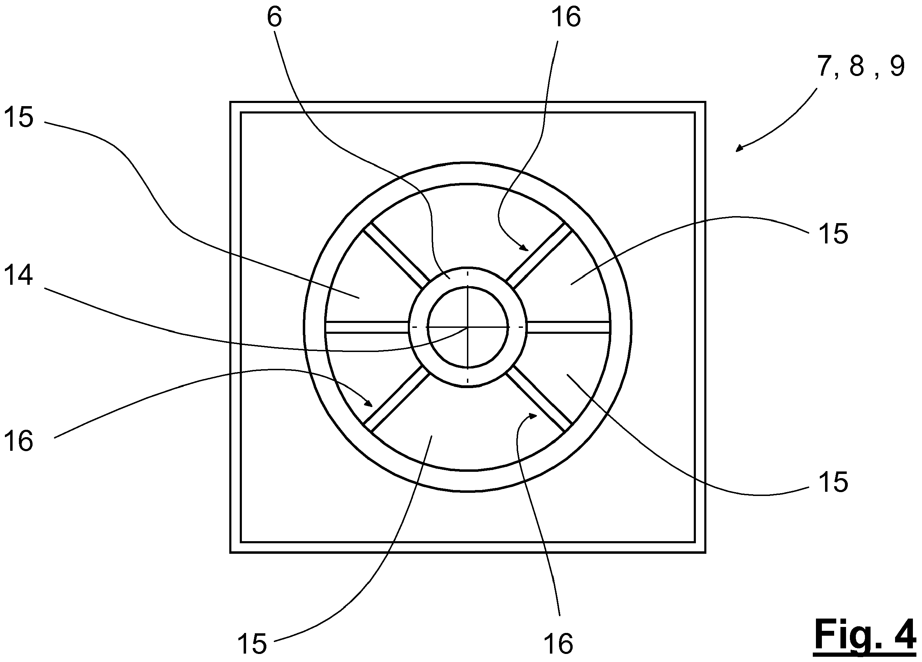

Figur 4 zeigt eine Alternative zur Ausführung gemäß Figur 3. Hier wird im Kühltank ein festes Kammersystem eingesetzt das ebenfalls Kammern 15 aufweist die durch Trennwände 16 geteilt sind. Die Kammern 15 haben unterschiedliche Größen und das Ende der Trennwände 18 bildet gleichzeitig den Durchlassquerschnitt für das Profil 6.

### Bezugszeichenliste:

- 1: Extruder
- 2: Extrusionswerkzeug
- 3: Kalibrier- und/oder Kühleinrichtung
- 4: Abzugsvorrichtung
- 5: Trennvorrichtung
- 6: Profil
- 7: erster Kühltank
- 8: zweiter Kühltank
- 9: dritter Kühltank
- 10: Absaugeinrichtung
- 11: erster Verbindungstunnel
- 12: zweiter Verbindungstunnel
- 13: Strömung
- 14: Extrusionsrichtung
- 15: Kammer in 7, 8 und/oder 9
- 16: Trennwand
- 17: ...
- 18: Ende von 16
- 19: Eintrittsbereich
- 20: Austrittsbereich
- 21: Zusatzöffnung
- 22: Sprühdüsen
- 23: Leitbleche

## Patentansprüche

1. Verfahren zum Erhöhen der Kühlleistung einer Extrusionslinie und zum energieeffizienten Extrudieren eines Kunststoffprofils, insbesondere eines Kunststoffrohres, das die Schritte umfasst,
a) Aufschmelzen von Kunststoff in einem Extruder (1),
b) Formen eines Kunststoffstranges und Zuführen des Kunststoffstranges zu einem Werkzeug (2),
c) Formen eines Kunststoffprofiles mittels des Werkzeuges (2) und
d) Kalibrieren und Aushärten mittels Kühlung des Profils in einer Kühl und/oder Kalibrierung (3), wobei
zur äußeren Kühlung des Profils (6) ein gasförmiges Medium durch einen oder mehrere Kühltanks (7, 8, 9) gesaugt wird,
wobei sich die Temperatur und die Sättigung des gasförmigen Mediums, zwischen einem Eintrittsbereich (19) und einem Austrittsbereich (20) für das gasförmige Medium, erhöht,
wobei zwischen dem Eintrittsbereich (19) und dem Austrittsbereich (20) über Sprühdüsen (22) ein flüssiges Medium zugegeben wird,
wobei das flüssige Medium durch Erwärmung verdunstet und die Sättigung des gasförmigen Mediums erhöht wird,
**dadurch gekennzeichnet, dass** sowohl die Temperatur als auch die Sättigung des gasförmigen Mediums beeinflusst werden und durch die Maschinensteuerung bei der Erhöhung der Sättigung des gasförmigen Mediums dessen Taupunkt nicht überschritten wird sowie über ein mathematisches Modell die Menge des gasförmigen Mediums und die Menge des eingesprühten flüssigen Mediums derart gesteuert werden, dass eine optimale Wärmemenge dem Profil an der Oberfläche entzogen wird.

2. Verfahren nach Anspruch 1, **dadurch gekennzeichnet, dass** über Zusatzöffnungen (21) zusätzliches gasförmiges Medium angesaugt wird.

3. Verfahren nach einem der vorigen Ansprüche, **dadurch gekennzeichnet, dass** nachdem das gasförmige Medium durch einen oder mehrere Kühltanks gesaugt wurde abgekühlt wird und durch das Abkühlen eine Übersättigung auftritt und das flüssige Medium kondensiert.

4. Verfahren nach Anspruch 3, **dadurch gekennzeichnet, dass** abgekühlte gasförmige Medium erneut dem Eintrittsbereich (19) und das flüssige Medium den Sprühdüsen (22) zugeführt wird.

5. Verfahren nach einem der vorigen Ansprüche, **dadurch gekennzeichnet, dass** das gasförmige Medium mittels Leitbleche (23) um die Oberfläche das Profiles (6) geführt wird.

6. Verfahren nach einem oder mehrerer der vorigen Ansprüche, **dadurch gekennzeichnet, dass** das gasförmiges Medium durch einen oder mehrere Kühltanks (7, 8, 9) entgegen der Extrusionsrichtung (14) des extrudierten Kunststoffprofils (6) gesaugt wird.

7. Verfahren nach einem der vorigen Ansprüche, **dadurch gekennzeichnet, dass** das gasförmiges Medium durch eine oder mehrere Kammern (15) des Kühltanks (7, 8, 9) geführt wird, wobei das gasförmige Medium nicht von einer Kammer (15) zur benachbarten Kammer (15) zu gelangen kann.

8. Vorrichtung zum Erhöhen der Kühlleistung einer Extrusionslinie und zum energieeffizienten Extrudieren eines Kunststoffprofils, insbesondere eines Kunststoffrohres, konfiguriert zur Durchführung eines Verfahrens gemäß einem der Ansprüche 1 bis 7, umfassend mindestens
einen Extruder (1),
ein Werkzeug (2),
eine Kalibrier- und Kühleinrichtung (3), eine Maschinensteuerung
sowie weitere Nachfolgeeinrichtungen (4, 5),
wobei die Kalibrier- und Kühleinrichtung (3) mindestens einen Kühltank (7, 8, 9) umfasst,
wobei die Kalibrier- und Kühleinrichtung (3) einen Eintrittsbereich (19) aufweist durch die ein gasförmiges Medium zuführbar ist,
wobei in mindestens einem Kühltank (7, 8, 9) Sprühdüsen angeordnet sind über die ein flüssiges Medium zuführbar ist,
**dadurch gekennzeichnet, dass**
im Kühltank (7, 8, 9) Leitbleche (23) angeordnet sind die individuell verstellbar sind mittels denen das gasförmige Medium um die Oberfläche das Profiles (6) führbar ist oder
dass der Kühltank (7, 8, 9) eine oder mehrere Kammern (15) aufweist durch die ein gasförmiges Medium führbar ist, wobei die einzelnen Kammern (15) derart aufgebaut sind, dass das gasförmige Medium gehindert ist von einer Kammer (15) zur benachbarten Kammer (15) zu gelangen,
wobei die Kammern (15) durch im Kühltank (7, 8, 9) angeordnete Trennwände (16) gebildet werden.

9. Vorrichtung nach Anspruch 8, **dadurch gekennzeichnet, dass** im Kühltank (7, 8, 9) Zusatzöffnungen (21) angeordnet sind.

10. Vorrichtung nach Anspruch 8 oder 9, **dadurch gekennzeichnet, dass** das die Trennwände (16) in Richtung zur Extrusionsachse (14) in ihrer Länge veränderbar sind.

## Claims

1. Process for increasing the cooling capacity of an extrusion line, and for the energy efficient extrusion of a plastic profile, in particular a plastic pipe, comprising the steps of
a) Fusing plastic inside an extruder (1),
b) Forming a plastic strand and supplying the plastic stand to a die (2),
c) Forming a plastic profile by means of said die (2), and
d) Calibrating and hardening the profile through cooling inside a cooling and/or calibration line (3),
a gaseous medium being sucked through one or several cooling tanks (7, 8, 9) for outer cooling,
the temperature and saturation of the gaseous medium increasing between the inlet area (19) and the outlet area (20) for said gaseous medium,
a fluid medium being added via spray nozzles (22) between the inlet area (19) and the outlet area (20),
said fluid medium evaporating due to heating, thus increasing the saturation of the gaseous medium,
**characterized in that**
the temperature as well as the saturation of the gaseous medium is being influenced, and that due to machine control, the dew point of the gaseous medium is not exceeded when increasing the saturation, that furthermore, the quantity of the gaseous medium and the quantity of the injected fluid medium are controlled as a function of a mathematical model in such a manner that an optimal amount of heat is removed from the profile at its surface.

2. Process according to claim 1, **characterized in that** additional gaseous medium is drawn in through additional openings (21).

3. Process according to one of the preceding claims, **characterized in that** after being drawn though one or several cooling tanks, the gaseous medium is cooled, the cooling process leading to an oversaturation, due to which the fluid medium condensates.

4. Process according to claim 3, **characterized in that** the cooled gaseous medium is again supplied to the inlet area (19), while the fluid medium is again supplied to the spray nozzles (22).

5. Process according to one of the preceding claims, **characterized in that** the gaseous medium is driven around the surface of the profile (6) via guide plates.

6. Process according to one or several of the preceding claims, **characterized in that** the gaseous medium is sucked through one or several cooling tanks (7, 8, 9) in the opposite direction to the extrusion direction (14) of the extruded plastic profile (6).

7. Process according to one of the preceding claims, **characterized in that** the gaseous medium is sucked through one or several chambers (15) of the cooling tank (7, 8, 9), the gaseous medium not being able to pass from one chamber (15) to the adjacent chamber (15).

8. Device for increasing the cooling capacity of an extrusion line, and for the energy efficient extrusion of a plastic profile, in particular a plastic pipe, configured for the implementation of a process according to one of the claims 1 to 7, comprising at least
an extruder (1),
a die (2),
a calibration and cooling device (3),
a machine control
as well as further downstream devices (4, 5)
the calibration and cooling device (3) comprising at least one cooling tank (7, 8, 9),
the calibration and cooling device (3) featuring an inlet area (19) through which a gaseous medium can be injected,
spray nozzles through which a fluid medium can be injected being arranged in at least one of the cooling tanks (7, 8, 9),
**characterized in that**
guide plates (23) are arranged inside the cooling tank (7, 8, 9), the guide plates being individually adjustable and allowing for the gaseous medium to be driven around the surface of the profile (6) or
that the cooling tank (7, 8, 9) features one or several chambers (15) through which a gaseous medium can be led, the individual chambers (15) being designed in such a way that the gaseous medium is prevented from passing from one chamber (15) to the adjacent chamber (15),
the chambers (15) being formed by partition walls (16) arranged inside the cooling tank (7, 8, 9).

9. Device according to claim 8, **characterized in that** additional openings (21) are arranged inside the cooling tank (7, 8, 9).

10. Device according to claim 8 or 9, **characterized in that** the partition walls (16) can be are modifiable in length in the direction of the extrusion axis (14).

## Revendications

1. Procédé d'augmentation de la capacité de refroidissement d'une ligne d'extrusion et de l'extrusion énergétiquement efficace d'un profile en plastique, notamment d'un tube en plastique, comprenant les étapes
a) Fusion d'un matériau plastique dans une extrudeuse (1),
b) Façonnement d'un cordon plastique et introduction du cordon plastique dans un outil (2),
c) Façonnement d'un profile en plastique à l'aide d'un outil (2) et
d) Calibrage et durcissement par voie de refroidissement du profile dans un dispositif de refroidissement et/ou de calibrage (3),
un milieu gazeux étant sucé à travers un ou plusieurs réservoirs de refroidissement (7, 8, 9) pour le refroidissement extérieur du profile (6),
la température ainsi que la saturation du milieu gazeux augmentant entre une zone d'entrée (19) et une zone de sortie (20) pour le milieu gazeux,
un milieu liquide étant ajouté par des buses de pulvérisation (22), ledit milieu liquide se vaporisant par échauffement et la saturation du milieu gazeux augmentant,
**caractérisé en ce que**
la température ainsi que la saturation du milieu gazeux étant influencées et que grâce à la commande de la machine, le point de rosée du milieu gazeux n'est pas excédé lors de l'augmentation de la saturation du milieu gazeux et qu'en fonction d'un modèle mathématique la quantité du milieu gazeux et la quantité du milieu liquide injecté sont commandées de telle façon qu'une quantité optimale de chaleur est extraite du profile à sa surface.

2. Procédé selon la revendication 1, **caractérisé en ce que** du milieu gazeux supplémentaire est sucé par des orifices supplémentaires (21).

3. Procédé selon l'une quelconque des revendications précédentes, **caractérisé en ce qu'**après avoir été sucé à travers un ou plusieurs réservoirs de refroidissement, le milieu gazeux est refroidi et qu'une sursaturation survient à cause du refroidissement et que le milieu liquide condense.

4. Procédé selon la revendication 3, **caractérisé en ce que** le milieu gazeux refroidi est réintroduit dans la zone d'entrée (19), le médium liquide étant réintroduit dans les buses de pulvérisation (22).

5. Procédé selon l'une quelconque des revendications précédentes, **caractérisé en ce que** le milieu gazeux est conduit autour de la surface du profile (6) à l'aide de plaques de guidage (23).

6. Procédé selon l'une quelconque ou plusieurs des revendications précédentes, **caractérisé en ce que** le milieu gazeux est sucé à travers un ou plusieurs réservoirs de refroidissement (7, 8, 9) dans la direction opposée à la direction d'extrusion (14) du profile en plastique (6) extrudé.

7. Procédé selon l'une quelconque des revendications précédentes, **caractérisé en ce que** le milieu gazeux est guidé à travers un ou plusieurs chambres (15) du réservoir de refroidissement (7, 8, 9), le milieu gazeux ne pouvant pas passer d'une chambre (15) à l'autre (15).

8. Appareil d'augmentation de la capacité de refroidissement d'une ligne d'extrusion et de l'extrusion énergétiquement efficace d'un profile en plastique, notamment d'un tube en plastique, configuré pour l'exécution d'un procédé selon l'une quelconque des revendications 1 à 7, comprenant au moins
une extrudeuse (1),
un outil (2)
un dispositif de calibrage et de refroidissement (3),
une commande de la machine
ainsi que d'autres installations placées en aval (4, 5),
le dispositif de calibrage et de refroidissement (3) comprenant au moins un réservoir de refroidissement (7, 8, 9),
le dispositif de calibrage et de refroidissement (3) montrant une zone d'entrée (19) à travers laquelle un milieu gazeux peut être introduit,
des buses de pulvérisation à travers lesquelles un milieu liquide peut être injecté étant arrangées dans au moins un réservoir (7, 8, 9),
**caractérisé en ce que**
des plaques de guidage (23) étant arrangées dans le réservoir de refroidissement (7, 8, 9), les plaques de guidage (23) pouvant être ajusté individuellement et permettant de guider le milieu gazeux autour de la surface du profile (6) ou
que le réservoir de refroidissement (7, 8, 9) comprend un ou plusieurs chambres (15) à travers lesquelles un milieu gazeux peut être guidé, les chambres individuelles (15) étant construites de telle façon que le milieu gazeux est empêché de passer d'une chambre (15) à l'autre (15),
les chambres (15) étant formées par des parois de séparation (16) arrangées dans le réservoir de refroidissement (7, 8, 9).

9. Appareil selon la revendication 8, **caractérisé en ce que** des orifices supplémentaires (21) sont arrangés dans le réservoir de refroidissement (7, 8, 9).

10. Appareil selon l'une quelconque des revendications 8 ou 9, **caractérisé en ce que** la longueur des parois de séparation (16) peut être modifiée dans la direction de l'axe d'extrusion (14).
